# EUROPEAN PATENT APPLICATION

(11) **EP 4 769 230 A1**
(43) Date of publication of application: **01.07.2026**
(21) Application number: 25227283.6
(22) Date of filing: 26.12.2025
(51) Int. Cl.: G06N 3/063

(54) **EFFICIENT MACHINE-LEARNING ACCELERATION IN GENERAL-PURPOSE COMPUTE SOCS**

(30) Priority: 27.12.2024 US 202419003052
(71) Applicant: Google LLC, Mountain View, CA 94043 (US)
(72) Inventor: Isachar, Ori, 6789141 Tel Aviv (IL); Mishali, Moshe, 6789141 Tel Aviv (IL); Fishel, Liran, 6789141 Tel Aviv (IL)
(74) Representative: Betten & Resch

(57) **Abstract**

Generally disclosed herein is an approach for an optimized data computation for machine learning (ML) operations using a plurality of small-sized ML accelerators integrated into a general-purpose compute system-on-chip (SoC). One or more processors of the general-purpose compute SoC may be configured to receive a workload and divide the workload into a plurality of sub-workloads. The plurality of sub-workloads may be distributed among the plurality of small-sized ML accelerators. Each of the plurality of the ML accelerators can be configured to output a partial outcome. The outputs from each ML accelerator can be combined using atomic store operations using a dedicated opcode and a specified memory address.

## Description

### BACKGROUND

As machine learning workloads and their associated computational complexity increase, it may be advantageous to integrate machine learning (ML) accelerators into a general-purpose compute system-on-chip (SoC). Most dedicated ML accelerators and application-specific integrated circuits (ASIC) such as Tensor Processing Units (TPUs) typically utilize expensive and capacity-limited high bandwidth memory (HBM). If ML accelerators are integrated into the general-purpose compute SoC, certain compute tasks from TPU can be offloaded to the general-purpose compute SoC, thereby freeing up some of the TPU's HBM for higher priority operation and eliminating bottlenecks.

Integrating a single, large ML accelerator into a general-purpose compute SoC may be challenging and inefficient because such a single large ML accelerator may result in an increase of die size and manufacturing cost. Further, in the general-purpose compute SoC, there are multiple dedicated crosspoints which are interfaces to the SoC's interconnects and a single crosspoint is limited in bandwidth. Therefore, in order to host a single larger ML accelerator, multiple crosspoints require multiple wires to be spread across the general-purpose compute SoC leading to routing congestion. Moreover, a single large ML accelerator may have a very high-power density that can result in a thermal hotspot in the general-purpose compute SoC.

### BRIEF SUMMARY

The technology generally relates to an efficient and optimized data computation for machine learning (ML) operations using a plurality of small-sized ML accelerators integrated into a general-purpose compute system-on-a-chip (SoC). The plurality of the ML accelerators can be configured to perform distributed operations for specific ML applications such as complex matrix multiplications. The outputs from each ML accelerator can be combined using atomic store operations that guarantee complete and indivisible writes to memory to ensure data integrity.

An aspect of the disclosure provides for a system on a chip (SoC) comprising memory, a plurality of machine learning (ML) accelerators, and one or more processors in communication with the one or more ML accelerators, the one or more processors configured to receive a workload, divide the workload into one or more sub-tasks, distribute the one or more sub-tasks to the one or more ML accelerators, wherein each ML accelerator is configured to output a respective partial outcome based on the distributed sub-task it receives, wherein the respective partial outcome includes a dedicated opcode and a specified memory address, store the respective partial outcome of each ML accelerator in the memory, and combine the stored partial outcomes to obtain a total outcome using an atomic store operation in the specified memory address.

In some examples, each of the plurality of ML accelerators may be placed in different locations within the SoC.

In some examples, the memory may include at least one of a system-level cache (SLC) or a double data rate (DDR) memory.

In some examples, each ML accelerator may be configured to transmit the dedicated opcode, the specified memory address, and the respective partial outcome to the memory via an identical interconnect protocol.

In some examples, the memory may be configured to perform parallel arithmetic or logical operations based on a varying data format of the respective partial outcome received from each ML accelerator.

In some examples, the dedicated opcode may be modified based on the varying data format of the respective partial outcome received from each ML accelerator and a type of the arithmetic or the logical operations.

In some examples, the dedicated opcode may be modified to encompass parallel floating-point arithmetic operations that include at least one summation, multiplication, subtraction, or division.

In some examples, the dedicated opcode may be modified to encompass parallel logical operations that include Boolean operations, finding maximum values or minimum values, or summation of squares.

In some examples, the one or more processors may be configured to notify each ML accelerator of a time when the respective partial outcome is to be stored in the memory using a memory-mapped input-output (MMIO) write.

In some examples, the plurality of ML accelerators may be configured to notify each ML accelerator of a time when the respective partial outcome is to be stored in the SLC or the DDR memory using a memory-mapped input-output (MMIO) write.

Another aspect of the disclosure provides for a method for optimizing data computation for machine learning (ML) operations. The method may comprise receiving, by one or more processors, a workload, dividing, by the one or more processors, the workload into one or more sub-tasks, distributing, by the one or more processors, the one or more sub-tasks to one or more ML accelerators, outputting, by the one or more ML accelerators, a plurality of partial outcomes, wherein the plurality of partial outcomes include a dedicated opcode and a specified memory address, storing, by the one or more ML accelerators, the plurality of partial outcomes in the memory, and combining, by the one or more ML accelerators, the stored plurality of partial outcomes to obtain a total outcome using an atomic store operation in the specified memory address.

In some examples, each of the plurality of ML accelerators may be placed in different locations within a system-on-chip (SoC).

In some examples, the memory may include at least one of a system-level cache (SLC) or a double data rate (DDR) memory.

In some examples, the method may further comprise transmitting, by the one or more ML accelerators, the dedicated opcode, the specified memory address, and the respective partial outcome to the memory via an identical interconnect protocol.

In some examples, the method may further comprise performing, by the memory, parallel arithmetic or logical operations based on a varying data format of the respective partial outcome received from each ML accelerator.

In some examples, the dedicated opcode may be modified based on the varying data format of the respective partial outcome received from each ML accelerator and a type of the arithmetic or the logical operations.

In some examples, the dedicated opcode may be modified to encompass parallel floating-point arithmetic operations that include at least one summation, multiplication, subtraction, or division.

In some examples, the dedicated opcode may be modified to encompass parallel logical operations that include Boolean operations, finding maximum values or minimum values, or summation of squares.

In some examples, each of the one or more ML accelerators may be notified by the one or more processors of a time when the respective partial outcome is to be stored in the memory using a memory-mapped input-output (MMIO) write.

In some examples, each of the one or more ML accelerators may be notified of a time when the respective partial outcome is to be stored in the memory using a memory-mapped input-output (MMIO) write by each other.

### BRIEF DESCRIPTION OF THE DRAWINGS

FIG. 1 depicts an example general-purpose compute SoC integrated with multiple ML accelerators according to aspects of the disclosure.
FIG. 2 depicts an example ML accelerator control system according to aspects of the disclosure.
FIG. 3 depicts a functional block diagram of example atomic store operations according to aspects of the disclosure.
FIG. 4 depicts a block diagram of example matrix multiplication according to aspects of the disclosure.
FIG. 5 depicts a flow diagram illustrating an example method according to aspects of the disclosure.

### DETAILED DESCRIPTION

Generally disclosed herein is an approach for an optimized data computation for machine learning (ML) operations using a plurality of small-sized ML accelerators integrated into a general-purpose compute SoC. One or more processors of the general-purpose compute SoC may be configured to receive a workload and divide the workload into a plurality of sub-workloads. The plurality of sub-workloads may be distributed among the plurality of small-sized ML accelerators. Each of the plurality of the ML accelerators can be configured to output a partial output. The outputs from each ML accelerator can be combined using atomic store operations using a dedicated opcode and a specified memory address.

For example, multiple small ML accelerators can be placed at different locations within the general-purpose compute SoC. Instead of adding a dedicated new interface between the multiple ML accelerators, the multiple ML accelerators can be configured to communicate through an interconnect that is already being used by the general-purpose compute SoC. The ML accelerators are configured to perform specific ML applications like matrix multiplication. Such operations can be efficiently distributed across the multiple small ML accelerators. Each accelerator may be configured to handle a portion of the input data resulting in partial outputs. The final results may be obtained by efficiently combining the partial outputs from all ML accelerators using the existing interconnect.

According to some examples, the final results are combined using atomic store operations to allow a single memory write per operation. Thus, each ML accelerator is not required to "Read Modify Write" to memory. The ML accelerator is configured to transmit a dedicated opcode and memory address when transmitting the partial output. In some examples, the dedicated opcode can be modified to encompass a wide range of operations, not limited to summation. The partial outcomes of all ML accelerators are transmitted to a memory for the atomic store operations. A portion of the memory can be assigned to the specific memory address and the outputs received from each ML accelerator can be combined in the specified address within the memory, thereby reducing additional accesses over the SoC interconnect and to the memory.

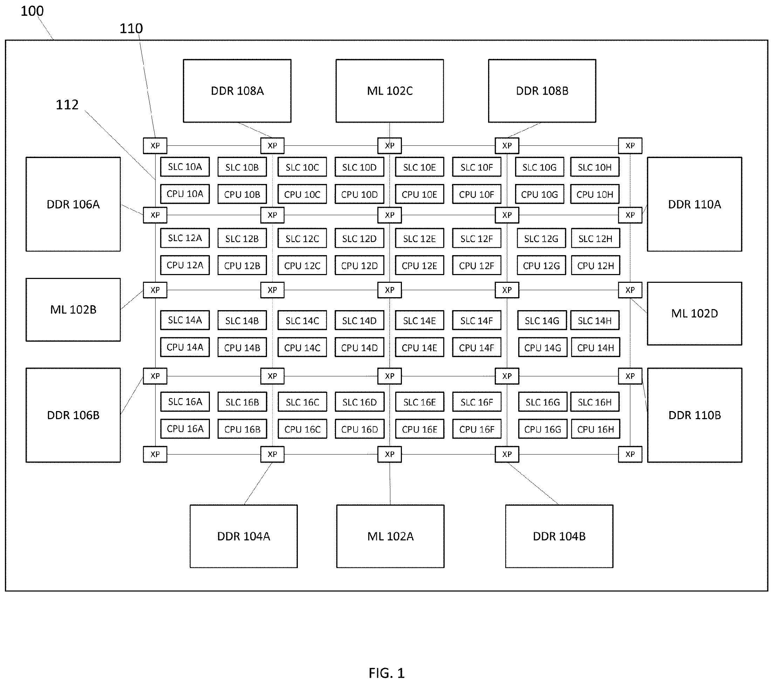

FIG. 1 depicts an example general-purpose compute SoC 100 with multiple ML accelerators. The general-purpose compute SoC 100 may include multiple arrays of CPUs and SLCs such as CPUs 10A-H, 12A-H, 14A-H, 16A-H, and SLCs 10A-H, 12A-H, 14A-H, and 16A-H. Each array of CPUs and SLCs is interconnected via respective buses and crosspoints (XP) such as XP 110 and bus 112. General-purpose compute SoC 100 may also include multiple double data rate (DDR) synchronous dynamic random-access memory (SDRAM) such as DDR 104A-B, 106A-B, 108A-B, and 110A-B. General-purpose compute SoC 100 may also include machine learning accelerators such as ML accelerators 102A-D. It is to be understood that a general-purpose compute SoC may include N numbers of DDRs, ML accelerators, or arrays of CPUs and SLCs, where N is an integer. Each ML accelerator 102A-D may be small and configured to fit within the general-purpose compute SoC 100. Each ML accelerator may be configured to perform specific ML applications and handle a portion of the input data resulting in partial outputs. Each partial output may be transmitted to the memory via already existing buses and XP as illustrated in FIG.1, therefore eliminating the need for additional space used for additional interconnect. In one example, each ML accelerator 102A-D may be assigned to compute portions of matrix multiplications. Each ML accelerator 102A-D may send a respective partial output via crosspoints to the memory using an atomic store operation. When each accelerator 102A-D sends the respective partial output, each ML accelerator 102A-D may send a special opcode along with a specified memory address. The partial outputs can be combined in the specified memory address.

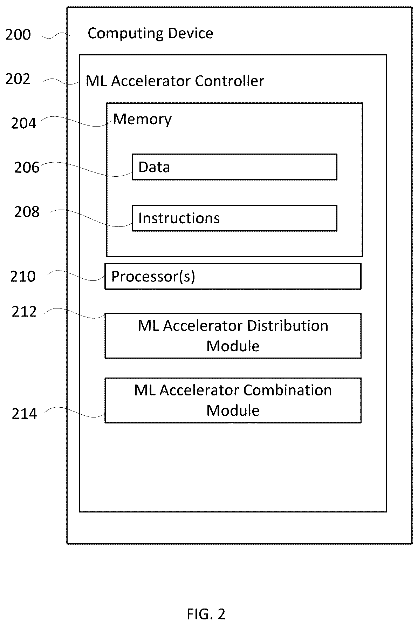

FIG. 2 is a block diagram illustrating an example ML accelerator control system. The computing device 200 can take on a variety of configurations, such as, for example, a controller or microcontroller, or a processor, such as a CPU, a GPU, or a custom logic, including a tensor processing unit (TPU). The computing device may further include an ML accelerator controller 202. ML accelerator controller 202 may be configured to distribute the workload among multiple ML accelerators disposed within a general-purpose compute SoC and receive the partial output from each ML accelerator.

ML accelerator controller 202 may include a processor 210, memory 204 including data 206 and instructions 208, ML accelerator distribution module 212, and ML accelerator combination module 214 as well as other components typically present in server computing devices. In other examples, such operations may be performed by one or more of the computing devices in a data center or elsewhere.

Memory 204 can store information accessible by processor 210, including instructions 208 that can be executed by processor 210. Memory 204 can also include data 206 that can be retrieved, manipulated, or stored by processor 210. Memory 204 may be a type of non-transitory computer-readable medium capable of storing information accessible by processor 210. Processor 210 can also be configured to communicate with external memory such as a hard drive, solid-state drive, tape drive, optical storage, memory card, ROM, RAM, DVD, CD-ROM, write-capable, and read-only memories. Processor 210 can be a well-known processor or other lesser-known types of processor. Alternatively, processor 210 can be a dedicated controller such as a custom logic

Instructions 208 can be a set of instructions executed directly, such as machine code, or indirectly, such as scripts, by processor 210. In this regard, the terms "instructions"," "steps", "programs", and "computer programs" can be used interchangeably herein. Instructions 208 can be stored in object code format for direct processing by processor 210, or other types of computer language including scripts or collections of independent source code modules that are interpreted on demand or compiled in advance. For example, instructions 208 may include instructions for computing complex machine learning computations using atomic store operations.

Data 206 can be retrieved, stored, or modified by processor 210 in accordance with instructions 208. For instance, although the system and method are not limited by a particular data structure, data 206 can be stored in computer registers, in a relational database as a table having a plurality of different fields and records, or in XML documents. Data 206 can also be formatted in a computer-readable format such as, but not limited to, binary values, ASCII, or Unicode. Moreover, data 206 can include information sufficient to identify relevant information, such as numbers, descriptive text, proprietary codes, pointers, references to data stored in other memories including other network locations, or information that is used by a function to calculate relevant data. Data 206 can include input data used for ML computations such as complex matrix multiplications.

ML accelerator distribution module 212 may divide particular workloads and distribute the divided workloads to each ML accelerator. For example, ML accelerators can be assigned to a computational task of multiplication of two large matrices. Each matrix may be divided into multiple sub-matrices including multiple rows and columns. Each ML accelerator may be assigned to subtasks of multiplications of sub-matrices. Each ML accelerator may be assigned to a different size of sub-matrix based on the ML accelerator's bandwidth. ML accelerator distribution module 212 may be configured to command each ML accelerator to perform similar computations using the assigned input data.

ML accelerator combination module 214 may be configured to command each ML accelerator to transmit respective partial output via respective buses and crosspoints to ML accelerator controller 202. ML accelerator combination module 214 may be configured to combine the collected partial outputs to obtain a final output.

FIG. 2 functionally illustrates processor 210 and memory 204 as being within the same block, but processor 210 and memory 204 may instead include multiple processors and memories that may or may not be stored within the same physical housing. For example, some of instructions 208 and data 206 may be stored on a removable CD-ROM and others may be within a read-only computer chip. Some or all of the instructions and data can be stored in a location physically remote from, yet still accessible by processor 210. Similarly, processor 210 can include a collection of processors, which may or may not operate in parallel.

It is to be appreciated that in this example, ML accelerator distribution module 212 and ML accelerator combination module 214 are shown as part of ML accelerator controller 202. In other examples, ML accelerator distribution module 212 and ML accelerator combination module 214 may be implemented by software in one or more other systems or computing devices.

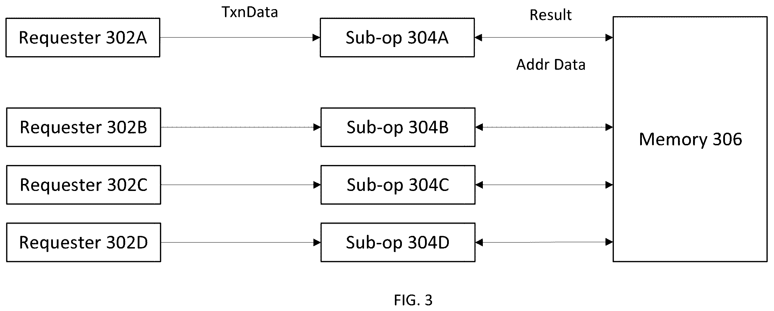

FIG. 3 depicts a functional block diagram of example atomic store operations. An atomic store operation may refer to a read-modify-write sequence performed without interference. For example, when requesters 302 A-D attempt to read-modify-write, other requesters cannot interfere with requesters 302 A-D's read-modify-write sequence. In one example, requesters 302 A-D may transmit transaction data to memory 306 which contains an arithmetic logic unit (ALU). ALU may perform arithmetic and logic operations on the operands in computer instructions. Once ALU receives the transaction data from requesters 302 A-D, ALU can execute the suboperations 304 A-D that may be indicated in the sub-opcode of the transaction data. In some examples, the SLC may be configured to read the address data indicated in the sub-opcode of the transaction data, and the SLC may be configured to use the transaction data and the address data in the transaction as operands. In some examples, the SLC may already have a local and up-to-date copy of the address. When the ALU completes the operations, the ALU may store the result of the operation in the specific address of memory 306 according to the address data. Each requester 302A-D may be a different ML accelerator, and each ML accelerator may transmit the transaction data using respective sub-op 304A-D using the specified address of memory 306. Although each ML accelerator transmits different transaction data and results, each ML accelerator may transmit such data using the same address of memory 306 such that each transmitted data can be combined in the specified address within memory 306. Memory 306 can be configured to perform all combinations with minimal additional access to the general-purpose compute SoC's memory.

In some examples, each ML accelerator 102A-D as depicted in FIG.1 is configured to transmit a dedicated opcode and memory address when transmitting the partial output to the SLC. The partial outputs of all ML accelerators 102A-D are transmitted to memory 306. Memory 306 may include a SLC. For the particular computations that the ML accelerators 102A-D are performing, a specific address of the SLC may be assigned to memory 306. Once all the partial outputs are received from ML accelerators 102A-D, the summation can be performed in the specific address of memory 306.

According to an aspect of the present disclosure, an enhanced ALU may include circuitries such as arithmetic adders to enhance atomic store operations, such that the enhanced ALU is able to perform a calculation on a full cache line worth of data (e.g. 64 bytes). In many existing SoCs, the traditional atomic store operations can only perform a calculation using 64bits (8 bytes) of the cache line since the traditional atomic store operations are usually intended for low-bandwidth control flows, and therefore do not require working on more than a 64-bit operand. However, ML operations may require higher bandwidth. By adding additional hardware as described above, the enhanced ALU may have up to eight (8) adders that can perform the calculation using 64B worth of data in parallel. If the cache line is 64B wide and the data format is 4 bytes, the enhanced ALU may include up to 16 adders or other arithmetic or logical units according to the cache line and operand size. It is to be understood that ALU may include larger numbers of adders or as many numbers of adders as needed according to the cache line size.

The enhanced ALU may include adders to support floating point addition, which is not supported by traditional atomic store operations. The enhanced ALU may also add new specified opcodes or parameters to existing opcodes to notify the memory that the instant operation is to be performed using the enhanced atomic store operation with the indication of the exact data format and request operation.

For example, the memory which includes an enhanced ALU may be configured to perform parallel arithmetic or logical operations based on varying data formats received from each ML accelerator. For example, if the 64-byte output data consists of 16 x 32-bit floating point values, the SLC may be configured to execute 16 summations simultaneously. If the output consists of 32 x 16-bit values, the SLC can be configured to execute 32 summations simultaneously. If the output data consists of 64 x 8-bit values, the SLC may be configured to execute 64 summations simultaneously.

In some examples, if the order of the arithmetic or logical operation is crucial, each ML accelerator can be notified of the time when each of them can execute its summation via memory-mapped input-output (MMIO) writes controlled using a central processing unit (CPU). In other examples, the ML accelerators can be configured to notify one another in the order of the arithmetic or logical operation.

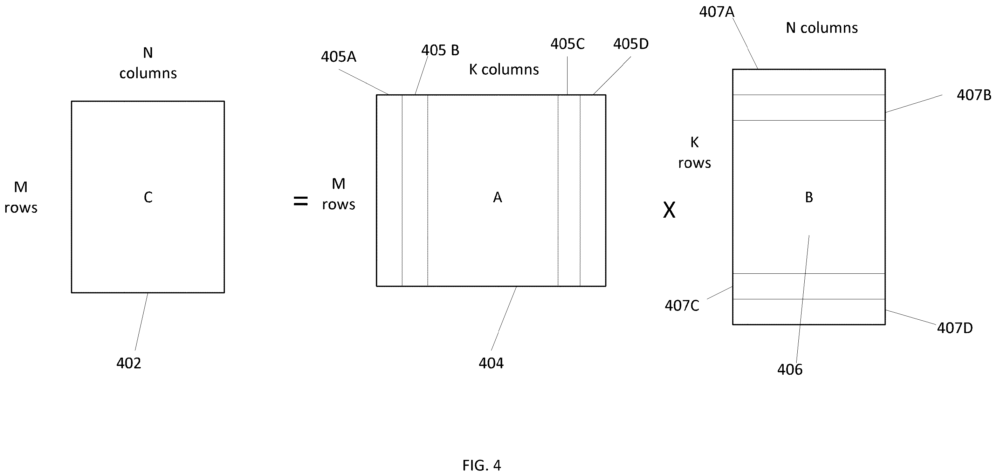

FIG. 4 depicts a block diagram of example matrix multiplication. In one example, multiple ML accelerators can be assigned to a multiplication of matrix 404 and matrix 406. Matrix 404 and matrix 406 may each include multiple rows and columns. Matrix 404 may consist of M rows x K columns and matrix 406 may consist of K rows and N columns. Matrix 404 may be divided into multiple sub-matrices 405A-D and matrix 406 may be divided into multiple sub-matrices 407A-D. Each sub-matrices may have one or more rows and one or more columns. Each matrix can be equally divided according to the number of ML accelerators. In other examples, each matrix can be unequally divided based on the bandwidth of each ML accelerator. Each ML accelerator may be assigned to a particular pair of sub-matrices. For example, the first ML accelerator may be assigned to sub-matrix 405A and 407A. The size of the sub-matrix 405A and 407A can vary according to the bandwidth of the ML accelerator. Each ML accelerator may be assigned to multiplications of sub-matrices such as multiplication of sub-matrices 405A and 407A, 405B and 407B, 405C and 407C, and 405D and 407D. Each ML accelerator may output respective partial outputs. The partial outputs may be combined to yield final output matrix 402.

Each ML accelerator may be configured to transmit the respective partial output via a dedicated interconnect and crosspoints embedded on a general-compute SoC. Each partial output may be indicated with a special opcode and specified memory address for the respective atomic store operation. Once all the partial outputs are received by the memory, the partial outputs may be combined to output the final output matrix 402.

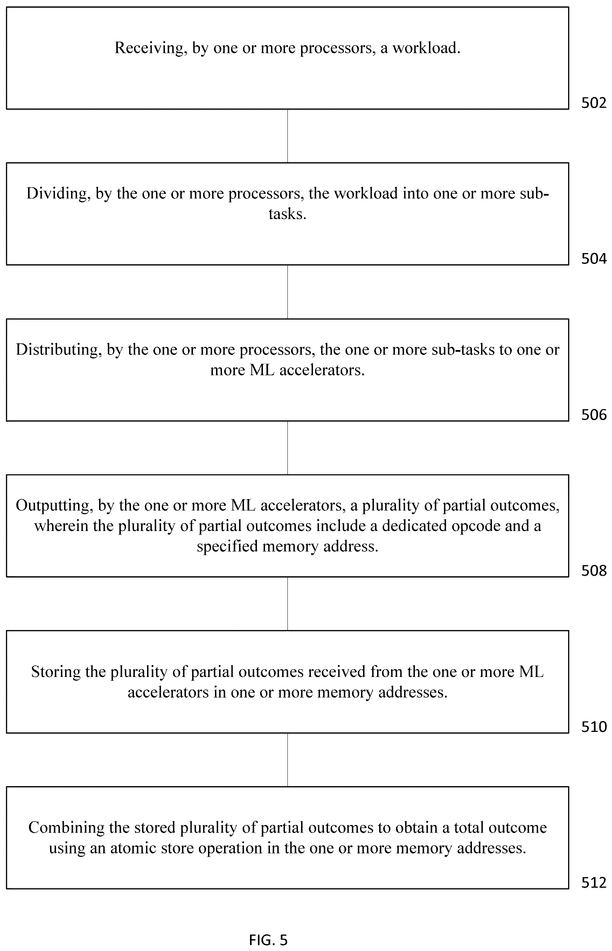

FIG. 5 depicts a flow diagram illustrating an example method. According to block 502, the system may be configured to receive a workload. The workload may include specific ML applications such as complex matrix multiplications. In some examples, the workload may include other kinds of arithmetic operations including summation, subtraction, or division. The workload may also include Boolean operations and logical operations such as finding maximum values, minimum values, or summation of squares, etc.

According to block 504, the system may be configured to divide the workload into one or more sub-tasks. For example, each matrix can be divided into multiple sub-matrices consisting of smaller numbers of rows and columns. In some examples, each matrix can be equally divided according to the number of ML accelerators. In other examples, each matrix can be unequally divided based on the bandwidth of each ML accelerator.

According to block 506, the system may be configured to distribute the one or more sub-tasks to one or more ML accelerators. Such workloads can be efficiently distributed across the multiple small ML accelerators embedded in a general-purpose SoC. Each ML accelerator may be configured to handle a portion of the input data resulting in partial outputs.

According to block 508, the system may be configured to command the ML accelerators to output a respective partial output based on the distributed sub-task it receives. wherein the respective partial output includes a dedicated opcode and a specified memory address. Each ML accelerator can be configured to transmit a dedicated opcode and memory address when transmitting the respective partial output. In some examples, the dedicated opcode can be modified to encompass a wide range of operations such as floating-point arithmetic operations.

According to block 510, the system may be configured to store the respective partial output received from each ML accelerator in one or more memory addresses. A portion of the memory can be assigned to the specified address in accordance with the specified address data included in the dedicated opcode. The partial outputs received from the ML accelerators can be combined in the specified address within the memory. The above-described in-memory combination can reduce the number of overall accesses of the memory. In some examples, the memory can include SLC, DDR memory, memory controller, or a combination thereof.

According to block 512, the system may be configured to combine the stored partial outputs to obtain a total outcome using an atomic store operation in the specified memory address. The outputs received from each ML accelerator can be combined using atomic store operations that guarantee complete and indivisible writes to memory to ensure data integrity. To enhance the atomic store operations, the existing ALU within the memory may be enhanced with additional adder circuitries to perform a calculation on the full cache line worth of data (e.g. 64 bytes). In some examples, block 510 and block 512 can be performed by the system simultaneously or almost simultaneously.

Although the technology herein has been described with reference to particular examples, it is to be understood that these examples are merely illustrative of the principles and applications of the present technology. It is, therefore, to be understood that numerous modifications may be made and that other arrangements may be devised without departing from the scope of the present technology as defined by the appended claims.

Unless otherwise stated, the foregoing alternative examples are not mutually exclusive but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims. In addition, the provision of the examples described herein, as well as clauses phrased as" "such as," "including," and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A system on a chip (SoC) comprising:
memory;
a plurality of machine learning (ML) accelerators; and
one or more processors in communication with the one or more ML accelerators, the one or more processors configured to;
receive a workload;
divide the workload into one or more sub-tasks;
distribute the one or more sub-tasks to the one or more ML accelerators, wherein each ML accelerator is configured to output a respective partial outcome based on the distributed sub-task it receives, wherein the respective partial outcome includes a dedicated opcode and a specified memory address;
store the respective partial outcome of each ML accelerator in the memory; and
combine the stored partial outcomes to obtain a total outcome using an atomic store operation in the specified memory address.

2. The SoC of claim 1, wherein each of the plurality of ML accelerators is placed in different locations within the SoC; and/or
wherein the memory includes at least one of a system-level cache (SLC) or a double data rate (DDR) memory.

3. The SoC of claim 1 or claim 2, wherein each ML accelerator is configured to transmit the dedicated opcode, the specified memory address, and the respective partial outcome to the memory via an identical interconnect protocol.

4. The SoC of claim 3, wherein the memory is configured to perform parallel arithmetic or logical operations based on a varying data format of the respective partial outcome received from each ML accelerator.

5. The SoC of claim 4, wherein the dedicated opcode is modified based on the varying data format of the respective partial outcome received from each ML accelerator and a type of the arithmetic or the logical operations.

6. The SoC of claim 5, wherein the dedicated opcode is modified to encompass parallel floating-point arithmetic operations that include at least one summation, multiplication, subtraction, or division; and/or
wherein the dedicated opcode is modified to encompass parallel logical operations that include Boolean operations, finding maximum values or minimum values, or summation of squares.

7. The SoC of any one of claims 4 to 6, wherein the one or more processors are configured to notify each ML accelerator of a time when the respective partial outcome is to be stored in the memory using a memory-mapped input-output (MMIO) write; and/or
wherein the plurality of ML accelerators are configured to notify each ML accelerator of a time when the respective partial outcome is to be stored in the memory using a memory-mapped input-output (MMIO) write.

8. A method for optimizing data computation for machine learning (ML) operations, the method comprising:
receiving, by one or more processors, a workload;
dividing, by the one or more processors, the workload into one or more sub-tasks;
distributing, by the one or more processors, the one or more sub-tasks to one or more ML accelerators;
outputting, by the one or more ML accelerators, a plurality of partial outcomes, wherein the plurality of partial outcomes include a dedicated opcode and a specified memory address;
storing, by the one or more ML accelerators, the plurality of partial outcomes in the memory; and
combining, by the one or more ML accelerators, the stored plurality of partial outcomes to obtain a total outcome using an atomic store operation in the specified memory address.

9. The method of claim 8, wherein each of the plurality of ML accelerators is placed in different locations within a system-on-chip (SoC); and/or
wherein the memory includes at least one of a system-level cache (SLC) or a double data rate (DDR) memory.

10. The method of claim 8 or claim 9, further comprising transmitting, by the one or more ML accelerators, the dedicated opcode, the specified memory address, and the respective partial outcome to the memory via an identical interconnect protocol.

11. The method of claim 10, further comprising performing, by the memory, parallel arithmetic or logical operations based on a varying data format of the respective partial outcome received from each ML accelerator.

12. The method of claim 11, wherein the dedicated opcode is modified based on the varying data format of the respective partial outcome received from each ML accelerator and a type of the arithmetic or the logical operations.

13. The method of claim 12, wherein the dedicated opcode is modified to encompass parallel floating-point arithmetic operations that include at least one summation, multiplication, subtraction, or division; and/or
wherein the dedicated opcode is modified to encompass parallel logical operations that include Boolean operations, finding maximum values or minimum values, or summation of squares.

14. The method of any one of claims 11 to 13, wherein each of the one or more ML accelerators is notified by the one or more processors of a time when the respective partial outcome is to be stored in the memory using a memory-mapped input-output (MMIO) write; and/or
wherein each of the one or more ML accelerators is notified of a time when the respective partial outcome is to be stored in the memory using a memory-mapped input-output (MMIO) write by each other.

15. A computer program comprising instructions that, when executed by one or more processors, cause the one or more processors to perform the method of any one of claims 8 to 14.
